# EUROPÄISCHE PATENTSCHRIFT

(11) **EP 1 408 225 B1**
(45) Veröffentlichungstag und Bekanntmachung des Hinweises auf die Patenterteilung: **13.06.2007**
(21) Anmeldenummer: 03019336.1
(22) Anmeldetag: 27.08.2003
(51) Int. Cl.: F02M 27/00, F02M 61/14

(54) **Adapter für Zerstäubungsanordnung**
Adapter for atomization device
Adaptateur pour vaporisateur

(30) Priorität: 07.10.2002 DE 10246697
(43) Veröffentlichungstag der Anmeldung: 14.04.2004
(73) Patentinhaber: ROBERT BOSCH GMBH, 70442 Stuttgart (DE)
(72) Erfinder: Brenner, Frank, 71686 Remseck (DE); Miller, Frank, 74360 Ilsfeld (DE); Albrodt, Hartmut, 71732 Tamm (DE); Beilhardt, Roland, 70825 Korntal-Muenchingen (DE)
(74) Vertreter: Körfer, Thomas

(56) Entgegenhaltungen:
- EP-A- 1 359 119
- WO-A-00/10911
- US-A- 3 971 847
- US-A- 5 146 896
- US-B1- 6 382 182

## Beschreibung

### Stand der Technik

Die Erfindung geht aus von einem Adapter für ein in eine Zerstäubungsanordnung einzusetzendes Brennstoffeinspritzventil nach der Gattung des Hauptanspruchs.

Bei brennstoffzellengestützten Transportsystemen kommen zur Gewinnung des benötigten Wasserstoffs aus kohlenwasserstoffhaltigen Kraftstoffen sog. chemische Reformer zum Einsatz.

Alle vom Reformer zum Reaktionsablauf benötigten Stoffe wie z.B. Luft, Wasser und Kraftstoff werden idealerweise dem Reformer in gasförmigem Zustand zugeführt. Da aber die Kraftstoffe, wie z.B. Methanol oder Benzin, und Wasser an Bord des Transportsystems vorzugsweise in flüssiger Form vorliegen, müssen sie erst, kurz bevor sie dem Reformer zugeführt werden, erhitzt werden, um sie zu verdampfen. Dies erfordert einen (vor-)verdampfer (separat oder im Reformer integriert), der in der Lage ist, die entsprechenden Mengen an gasförmigem Kraftstoff und Wasserdampf zur Verfügung zu stellen.

Da der Wasserstoff zumeist sofort verbraucht wird, müssen die chemischen Reformer in der Lage sein, die Produktion von Wasserstoff verzögerungsfrei, z.B. bei Lastwechseln oder Startphasen, an die Nachfrage anzupassen. Insbesondere in der Kaltstartphase müssen zusätzliche Maßnahmen ergriffen werden, da der Reformer keine Abwärme bereitstellt. Konventionelle Verdampfer sind nicht in der Lage, die entsprechenden Mengen an gasförmigen Reaktanden verzögerungsfrei zu erzeugen.

Es ist daher sinnvoll den Kraftstoff durch eine Zerstäubungseinrichtung in feinverteilter Form in den Reformer einzubringen, wobei, bei ausreichendem Wärmeangebot, der Verdampfungsprozeß durch die hohe Oberfläche des feinverteilten Kraftstoffs verbessert wird.

Die für die chemische Reaktion, in welcher beispielsweise der Kraftstoff unter anderem zu Wasserstoff reformiert wird, notwendige Temperatur wird durch sogenannte Katbrenner zur Verfügung gestellt. Katbrenner sind Komponenten, welche mit einem Katalysator beschichtete Flächen aufweisen. In diesen katalytischen Brennern wird das Kraftstoff/Luftgemisch in Wärme und Abgase gewandelt, wobei die entstehende Wärme beispielsweise über die Mantelflächen und/oder über den warmen Abgasstrom an die entsprechenden Komponenten, wie beispielsweise den chemischen Reformer oder einen Verdampfer, geführt wird.

Die Umsetzung des Kraftstoffs in Wärme ist stark von der Größe der Kraftstofftröpfchen, welche auf die katalytische Schicht auftreffen, abhängig. Je kleiner die Tröpfchengröße ist und je gleichmäßiger die katalytische Schicht mit den Kraftstofftröpfchen benetzt wird, desto vollständiger wird der Kraftstoff in Wärme gewandelt und desto höher ist der Wirkungsgrad. Der Kraftstoff wird so zudem schneller umgesetzt und Schadstoffemissionen gemindert. Zu große Kraftstofftröpfchen führen zu einer Belegung der katalytischen Schicht und damit zu einer nur langsamen Umsetzung. Dieses führt insbesondere in der Kaltstartphase beispielsweise zu einem schlechten Wirkungsgrad.

Da der Wasserstoff zumeist sofort verbraucht wird, müssen die chemischen Reformer in der Lage sein, die Produktion von Wasserstoff verzögerungsfrei, z. B. bei Lastwechseln oder Startphasen, an die Nachfrage anzupassen. Insbesondere in der Kaltstartphase müssen zusätzliche Maßnahmen ergriffen werden, da der Reformer keine Abwärme bereitstellt. Konventionelle Verdampfer sind nicht in der Lage, die entsprechenden Mengen an gasförmigen Reaktanden verzögerungsfrei zu erzeugen.

Beispielsweise sind aus der US 3,971,847 Vorrichtungen zur Reformierung von Kraftstoffen bekannt. Der Kraftstoff wird hierin von vom Reformer relativ weit entfernten Zumeßeinrichtungen über lange Zuführungsleitungen in einen temperierten Stoffstrom zugemessen und über eine Dosieröffnung am Ende der Zuführungsleitung in den Stoffstrom verteilt, welcher zum Ort des eigentlichen Reformierprozesses strömt.

Nachteilig bei den aus der obengenannten Druckschrift bekannten Vorrichtungen ist insbesondere, daß die langen Zuführungsleitungen zu Verzögerungen und Ungenauigkeiten im Zumessen von Kraftstoff führen, insbesondere bei starken Lastwechseln oder Warmstartphasen. Wird beispielsweise nach einer Stopphase, während der Kraftstoff durch die Temperatureinwirkung aus der Zuführungsleitung verdampft, die Kraftstoffzumessung wieder aufgenommen, so kommt es zu verzögerter Eindosierung von Kraftstoff in den temperierten Stoffstrom und zum Reformierungsprozeß durch das zunächst wieder aufzufüllende Totraumvolumen in der Zuführungsleitung. Das gleiche Problem ergibt sich bei besonders geringer Last. Im Weiteren stehen lange Zuführungsleitungen einer kompakten Bauweise entgegen, erhöhen die Fehleranfälligkeit und den Montageaufwand.

Weiterhin sind Adapter zur Montage von Kraftstoffeinspritzventilen bekannt, beispielsweise aus der US 6 382 182 B1. Aus der US 5 146 896 ist eine Halteklammer bekannt geworden, die zur Fixierung eines Einspritzventils dient.

### Vorteile der Erfindung

Der erfindungsgemäße Adapter für die Zerstäubungsanordnung mit den kennzeichnenden Merkmalen des Hauptanspruchs hat demgegenüber den Vorteil, daß ein beliebiges Brennstoffeinspritzventil mittels des Adapters in einfacher und sicherer Weise über eine Halteklammer mit dem Zerstäubungsrohr verbindbar ist. Der Adapter kann für beliebige Einbausituationen in einfacher Weise hergestellt werden. Die an dem Brennstoffeinspritzventil notwendigen Modifikationen zur Verwendung mit dem erfindungsgemäßen Adapter sind geringfügig und problemlos in den Fertigungsprozeß integrierbar.

Durch die in den Unteransprüchen aufgeführten Maßnahmen sind vorteilhafte Weiterentwicklungen des im Hauptanspruch angegebenen Adapters möglich.

Vorteilhafterweise ist der Adapter mit einer Öffnung zum Anschluß an eine Luftzufuhr ausgestattet, welche es erlaubt, Luft zuzuführen und mit dem Brennstoff bereits vor der Zumeßstelle zu vermischen.

Von Vorteil ist außerdem, daß die Öffnung beliebig gegenüber den Symmetrieachsen des Adapters verschiebbar in diesem angeordnet sein kann, um eine effektive Vermischung des Brennstoffs mit der Luft beispielsweise durch Dralleffekte zu gewährleisten.

Weiterhin ist von Vorteil, die Öffnung unter einem Winkel gegenüber der Längsachse des Adapters in Abströmrichtung zu neigen, wodurch die Mischung und Homogenisierung des Gemischs weiter positiv beeinflußt werden kann.

Der Adapter ist in einfacher Weise rohrförmig ausgebildet und kann dadurch leicht beispielsweise mittels Drehen hergestellt werden.

### Zeichnung

Ausführungsbeispiele der Erfindung sind in der Zeichnung vereinfacht dargestellt und in der nachfolgenden Beschreibung näher erläutert. Es zeigen:
- Fig. 1: eine schematische Gesamtdarstellung einer Zerstäubungsanordnung mit einem erfindungsgemäß ausgestalteten Adapter,
- Fig. 2A-B: eine schematische Darstellung eines ersten Ausführungsbeispiels eines erfindungsgemäßen Adapters am Zerstäubungsrohr,
- Fig. 3A-C: eine schematische Darstellung eines zweiten Ausführungsbeispiels eines erfindungsgemäß ausgestalteten Adapters,
- Fig. 4A-C: eine schematische Darstellung eines dritten Ausführungsbeispiels eines erfindungsgemäß ausgestalteten Adapters, und
- Fig. 5A-C: eine schematische Darstellung eines vierten Ausführungsbeispiels eines erfindungsgemäß ausgestalteten Adapters.

### Beschreibung der Ausführungsbeispiele

Nachfolgend werden Ausführungsbeispiele der Erfindung beispielhaft beschrieben.

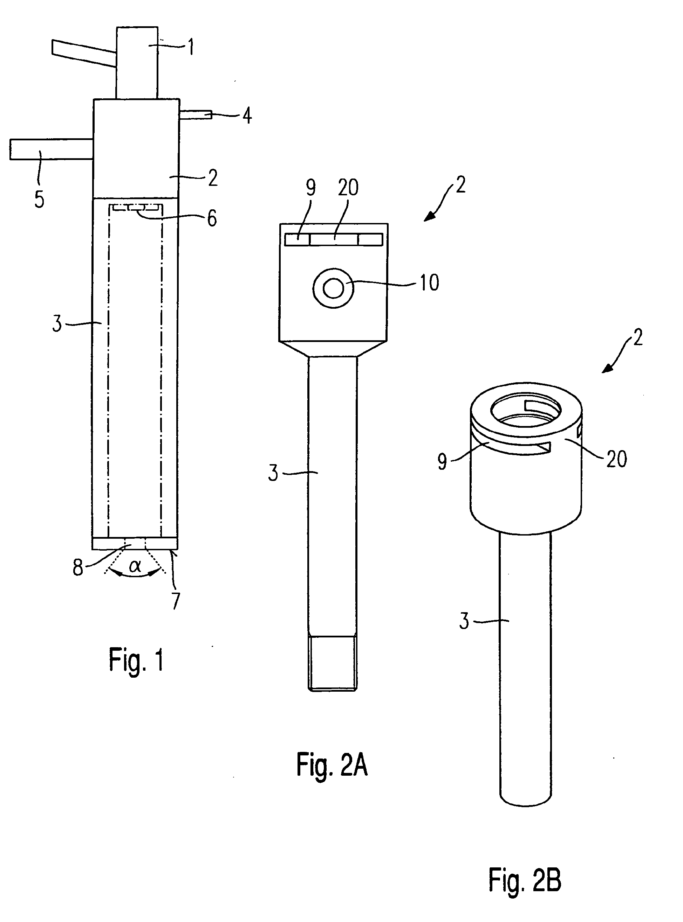

Fig. 1 zeigt in einer schematischen Gesamtdarstellung die Einbausituation eines Brennstoffeinspritzventils 1 in einem erfindungsgemäßen Adapter 2 an einem Zerstäubungsrohr 3. Das Brennstoffeinspritzventil 1 ist dabei in dem Adapter 2 mittels einer Halteklammer 4 fixiert. Optional kann an dem Adapter eine Luftzufuhr 5 in Form einer Zuleitung vorgesehen sein.

Das Brennstoffeinspritzventil 1 ist so in dem Adapter 2 angeordnet, daß abströmseitig des Adapters 2 eine Dosierstelle 6 ausgebildet ist, an welcher der Brennstoff in das Zerstäubungsrohr 3 dosiert wird. An einem abströmseitigen Ende 7 des Zerstäubungsrohrs 3 erfolgt die Zerstäubung des Brennstoffs an im Ausführungsbeispiel einer Zerstäubungsstelle 8. Hier wird der Brennstoff unter einem Öffnungswinkel α weiteren, nicht dargestellten Komponenten z. B. einer Brennstoffzelle zugeführt.

Fig. 2A zeigt in einer schematischen Darstellung einen entsprechenden Adapter 2 in einer gegenüber Fig. 1 um 90° gedrehten Ansicht. Der Adapter 2 weist Aussparungen 9 auf, in welchen nach dem Einschieben des Brennstoffeinspritzventils 1 eine in Fig. 2A nicht weiter dargestellte Halteklammer 4 eingeschoben wird. Das Brennstoffeinspritzventil 1 weist dementsprechend an seinem abspritzseitigen Ende ebenfalls eine geeignete Aussparung oder Ausnehmung auf, in welche die Halteklammer einrastet und das Brennstoffeinspritzventil 1 in dem Adapter 2 arretiert.

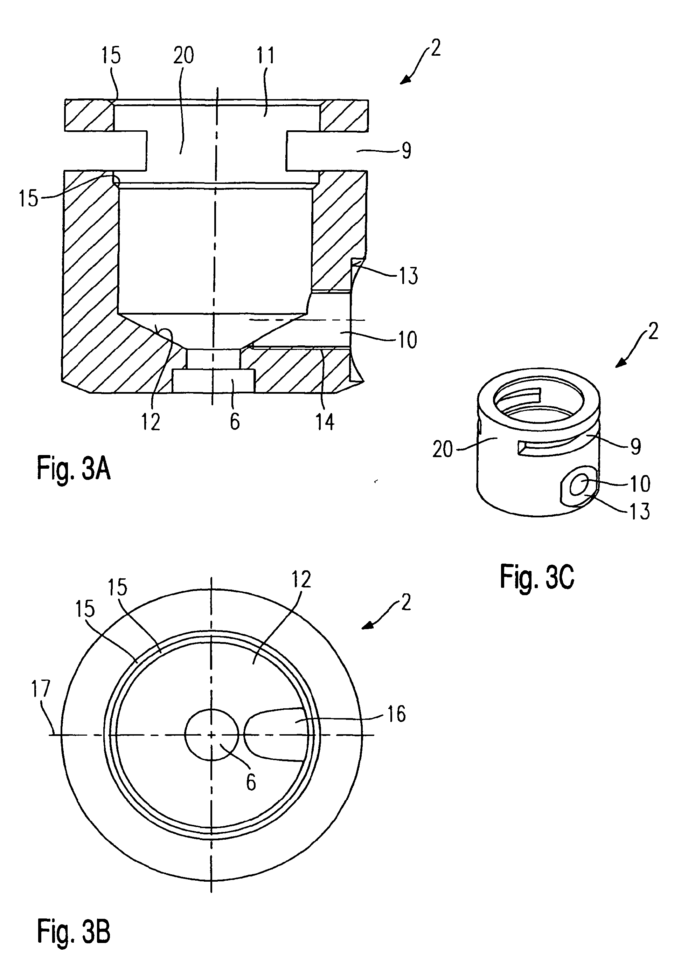

Weiterhin weist der Adapter 2 eine Öffnung 10 auf, an welche die Luftzufuhr 5 angeschlossen wird. Die Form sowie der Anschlußwinkel der Öffnung 10 für die Luftzufuhr 5 sind dabei beliebig und werden anhand von Ausführungsbeispielen, welche in den Figuren 3 bis 5 dargestellt sind, näher erläutert.

Fig. 2B zeigt zur besseren Verständlichkeit der folgenden Ausführungen einer perspektivische Darstellung eines erfindungsgemäßen Adapters 2, der an dem Zerstäubungsrohr 3 angebracht ist. Auch hier ist die Aussparung 9, in welche die Halteklammer 4 eingesetzt wird, beidseitig erkennbar.

Der Adapter 2 kann dabei mit dem Zerstäubungsrohr 3 auf beliebige geeignete Weise verbunden sein. Dies kann beispielsweise durch einstückige Ausformung, durch Schweißen, Löten oder Kleben erfolgen.

Die Figuren 3A bis 3C zeigen ein Ausführungsbeispiel eines erfindungsgemäßen Adapters 2 für die Verbindung zwischen dem Brennstoffeinspritzventil 1 und dem Zerstäubungsrohr 3, wie in Fig. 1 dargestellt.

Fig. 3A zeigt dabei den erfindungsgemäßen Adapter 2 in einem Längsschnitt durch die Öffnung 10, an welche die Luftzufuhr 5 ansteckbar ist. Der Adapter 2 ist dabei ungefähr topfförmig ausgebildet und weist eine Ausnehmung 11 zur Aufnahme des Brennstoffeinspritzventils 1 auf. Im zuströmseitigen Bereich sind die Aussparungen 9, in welche die in Fig. 3A nicht weiter dargestellte Halteklammer 4 eingesetzt wird, ausgebildet.

Im abströmseitigen Bereich ist die Öffnung 10, an welche die Luftzufuhr 5 angesteckt wird, ausgebildet. Sie mündet im Bereich einer schrägen Schulter 12, an welcher sich die Ausnehmung 11 des Adapters 2 zur Zumeßstelle 6 hin verjüngt, in eine Mulde 16 ein. Die Schulter 12 ist dabei so ausgebildet, daß sich das Brennstoffeinspritzventil 1 daran abstützen kann und durch die Halteklammer 4 in seiner Position sicher fixiert ist. Im vorliegenden Ausführungsbeispiel ist die Schulter 12 so angeschrägt, daß sich ein Öffnungswinkel von ca. 120° ergibt. Es sind jedoch gemäß der jeweiligen Form des Brennstoffeinspritzventils 1 auch andere Öffnungswinkel oder andere Schulterformen möglich.

In dem in Fig. 3A dargestellten Ausführungsbeispiel ist die Öffnung 10 zum Anstecken der Luftzufuhr 5 unter einem Winkel von 90° zum Brennstoffeinspritzventil 1 angeordnet. An einer Stufe 13 kann sich das Rohr zur Luftzufuhr 5 abstützen. Die Fixierung der Luftzufuhr 5 in der Öffnung 10 kann beispielsweise mittels eines Gewindes 14 erfolgen.

Fig. 3B zeigt eine Aufsicht auf den erfindungsgemäßen Adapter 2 gemäß Fig. 3A. In der Aufsicht sind neben der Schulter 12 weitere gestufte Bereiche 15 in dem Adapter 2 erkennbar, welche je nach der Form des Brennstoffeinspritzventils 1 bzw. dessen abströmseitigen Endes ausgelegt sein können. Weiterhin ist aus Fig. 3B erkennbar, daß die Luftzufuhr 5 bzw. die Öffnung 10 im vorliegenden Ausführungsbeispiel auf einer zentralen Achse 17 angeordnet und symmetrisch gestaltet ist und somit der Luftstrom zentral auf den zugemessenen Brennstoffstrahl, der durch das Brennstoffeinspritzventil 1 abgegeben wird, trifft.

Fig. 3C zeigt in gleicher Ansicht wie Fig. 2B den erfindungsgemäßen Adapter 2 gemäß Fig. 3A. Während in Fig. 2A die Öffnung 10 für die Luftzufuhr 5 unterhalb eines Steges 20, welcher die Aussparungen 9 für die Halteklammer 4 trennt, angeordnet ist, ist die Öffnung 10 in Fig. 3C unterhalb einer der Aussparungen 9 für die Halteklammer 4 angeordnet. Die Anordnung der Öffnung 10 ist beliebig und kann an die jeweilige Einbausituation angepaßt werden.

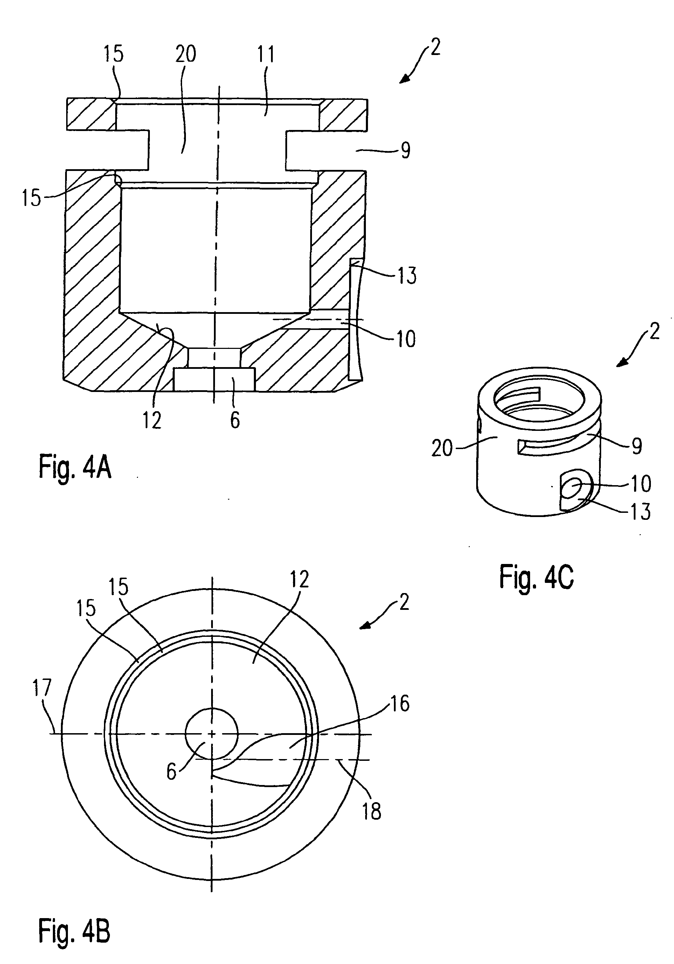

Fig. 4A bis 4C zeigt in gleicher Darstellung wie Fig. 3A bis 3C ein weiteres Ausführungsbeispiel eines erfindungsgemäßen Adapters 2. Auf eine wiederholende Beschreibung bereits beschriebener Teile wird verzichtet. Gleiche Bauteile sind dabei mit gleichen Bezugszeichen versehen.

Im Unterschied zu dem in Fig. 3 dargestellten Ausführungsbeispiel ist in dem in Fig. 4 dargestellten Ausführungsbeispiel die Öffnung 10 für die Luftzufuhr 5 nicht zentral auf den von dem Brennstoffeinspritzventil 1 abgespritzten Brennstoffstrahl gerichtet, sondern seitlich verschoben. Dies ist insbesondere in Fig. 4B zu erkennen, wo die Mulde 16, welche den Luftstrom in die Ausnehmung 11 des Adapters 2 führt, parallel zur Achse 17 auf eine weitere Achse 18 verschoben ist.

Dementsprechend ist der Adapter 2 durch den Absatz 13, wie in Fig. 4C ersichtlich, ebenfalls versetzt angeschnitten.

Vorteil dieses Ausführungsbeispiels ist dabei, daß der Luftstrom, welcher durch die Öffnung 10 von der Luftzufuhr 5 in die Ausnehmung 11 des Adapters 2 eingeleitet wird, durch die Verschiebung einen Drall aufnimmt. Dadurch kann die Verwirbelung des Brennstoffs mit der Luft effektiver und gleichmäßiger erfolgen als bei einer direkten zentralen Einleitung der Luft in den Brennstoffstrahl.

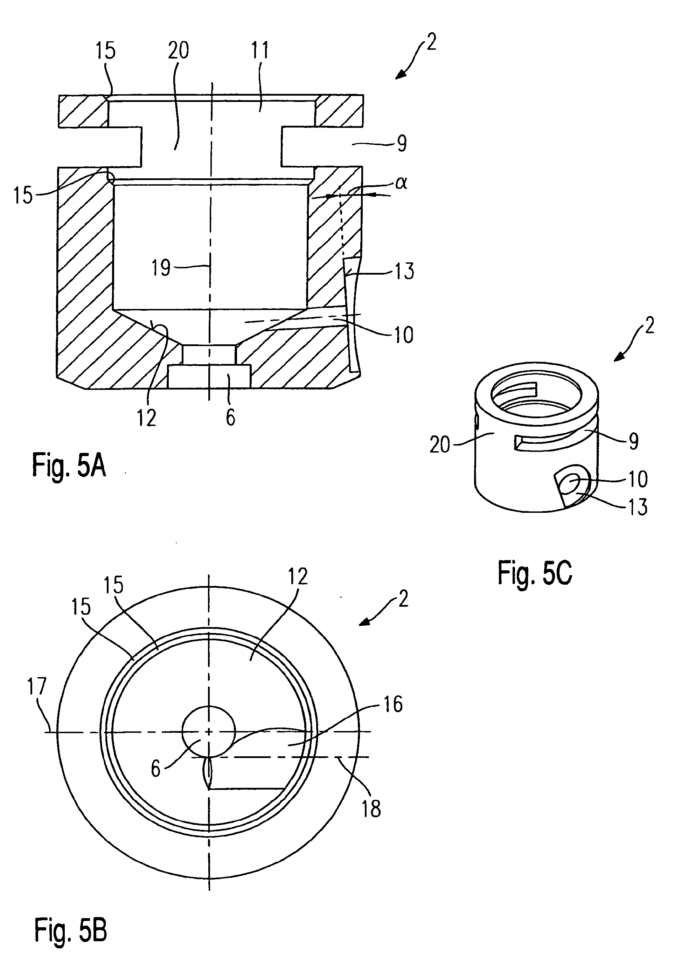

Die Figuren 5A bis 5C zeigen in gleicher Darstellung ein weiteres Ausführungsbeispiel eines erfindungsgemäß ausgestalteten Adapters 2, wobei hier die Öffnung 10 zur Einleitung des Luftstroms in den Adapter 2 sowohl achsparallel, wie in dem in den Fig. 4A bis 4C dargestellten Ausführungsbeispiel versetzt, als auch unter einem Winkel α gegenüber einer Längsachse 19 des Adapters 2 geneigt ist. Der Winkel α ist in Fig. 5A erkennbar.

Die achsparallele Verschiebung der Öffnung 10 ist aus Fig. 5B ersichtlich. Die Mulde 16 ist wiederum gegenüber der Achse 17 auf die Achse 18 verschoben.

Bedingt durch die Verschiebung und die Verkippung der Öffnung 10 sowie der Schulter 13 ergibt sich wiederum, wie aus Fig. 5C ersichtlich, eine etwas anders geformte Anschnittfläche für die Ausmündung der Öffnung 10 an der Außenseite des Adapters 2, wodurch die Luftzufuhr 5 einfacher an dem Adapter 2 anbringbar ist.

Vorteil der Neigung der Öffnung 10 gegenüber der Längsachse 19 des Adapters 2 ist dabei, daß die Einströmrichtung der Luft durch die Öffnung 10 bereits eine Komponente in Abströmrichtung des Brennstoff-Luftgemisches aufweist und somit die Mischung und Verwirbelung der Luft mit dem Brennstoff effektiver und gleichmäßiger gestaltet werden kann.

Die Erfindung ist nicht auf die beschriebenen Ausführungsbeispiele beschränkt und für beliebige Zerstäubungsanordnungen anwendbar.

## Patentansprüche

1. Zerstäubungsanordnung für Brennstoffe, insbesondere zum Eintrag in einen chemischen Reformer zur Gewinnung von Wasserstoff, mit einem Zerstäubungsrohr (3) und einem in die Zerstäubungsanordnung einsetzbaren Brennstoffeinspritzventil (1), wobei das Brennstoffeinspritzventil (1) zum Zumessen von Brennstoff an zumindest einer Dosierstelle (6) mittels eines Adapters (2) an dem Zerstäubungsrohr (3), in welches ein temperierter Stoffstrom über eine Zuleitung (5) einleitbar ist, angeordnet ist, und wobei das Brennstoffeinspritzventil (1) in dem Adapter (2) eingesteckt und mittels einer Halteklammer (4) an diesem fixiert ist.

2. Zerstäubungsanordnung nach Anspruch 1,
**dadurch gekennzeichnet,**
**daß** die Halteklammer (4) in Aussparungen (9) in dem Adapter (2) einschiebbar ist.

3. Zerstäubungsanordnung nach Anspruch 1 oder 2,
**dadurch gekennzeichnet,**
**daß** der Adapter (2) eine Öffnung (10) aufweist.

4. Zerstäubungsanordnung nach Anspruch 3,
**dadurch gekennzeichnet,**
**daß** die Zuleitung (5) in die Öffnung (10) einschiebbar ist.

5. Zerstäubungsanordnung nach Anspruch 3,
**dadurch gekennzeichnet,**
**daß** die Zuleitung (5) in die Öffnung (10) mittels eines Gewindes (14) einschraubbar ist.

6. Zerstäubungsanordnung nach einem der Ansprüche 3 bis 5,
**dadurch gekennzeichnet,**
**daß** die Öffnung (10) parallel zu einer radialen Achse (17) verläuft.

7. Zerstäubungsanordnung nach Anspruch 6,
**dadurch gekennzeichnet,**
**daß** der Adapter (2) eine Schulter (12) aufweist.

8. Zerstäubungsanordnung nach Anspruch 7,
**dadurch gekennzeichnet,**
**daß** sich die Öffnung (10) in Form einer Mulde (16) in die Schulter (12) des Adapters (2) erstreckt.

9. Zerstäubungsanordnung nach Anspruch 8,
**dadurch gekennzeichnet,**
**daß** die Mulde (16) gegenüber der radialen Achse (17) auf eine Achse (18) parallel verschoben ist.

10. Zerstäubungsanordnung nach Anspruch 8 oder 9,
**dadurch gekennzeichnet,**
**daß** die Öffnung (10) unter einem Winkel (α) gegenüber einer Längsachse (19) des Adapters (2) geneigt ist.

11. Zerstäubungsanordnung nach einem der Ansprüche 1 bis 10,
**dadurch gekennzeichnet,**
**daß** der Adapter (2) rohrförmig ausgebildet ist.

## Claims

1. Atomization arrangement for fuels, in particular for introduction into a chemical reformer for the recovery of hydrogen, with an atomization tube (3) and with a fuel injection valve (1) insertable into the atomization arrangement, the fuel injection valve (1) being arranged for the metering of fuel at at least one metering point (6) by means of an adapter (2) on the atomization tube (3), into which a thermally controlled material stream can be introduced via a supply line (5), and the fuel injection valve (1) being plugged in the adapter (2) and being fixed to the latter by means of a holding clip (4).

2. Atomization arrangement according to Claim 1,
**characterized in that** the holding clip (4) can be pushed into clearances (9) in the adapter (2).

3. Atomization arrangement according to Claim 1 or 2,
**characterized in that** the adapter (2) has an orifice (10).

4. Atomization arrangement according to Claim 3,
**characterized in that** the supply line (5) can be pushed into the orifice (10).

5. Atomization arrangement according to Claim 3,
**characterized in that** the supply line (5) can be screwed into the orifice (10) by means of a thread (14).

6. Atomization arrangement according to one of Claims 3 to 5,
**characterized in that** the orifice (10) runs parallel to a radial axis (17).

7. Atomization arrangement according to Claim 6,
**characterized in that** the adapter (2) has a shoulder (12).

8. Atomization arrangement according to Claim 7,
**characterized in that** the orifice (10) extends in the form of a basin (16) into the shoulder (12) of the adapter (2).

9. Atomization arrangement according to Claim 8,
**characterized in that** the basin (16) is displaced in parallel towards an axis (18) with respect to the radial axis (17).

10. Atomization arrangement according to Claim 8 or 9,
**characterized in that** the orifice (10) is inclined at an angle (α) with respect to a longitudinal axis (19) of the adapter (2).

11. Atomization arrangement according to one of Claims 1 to 10,
**characterized in that** the adapter (2) is of tubular design.

## Revendications

1. Dispositif de pulvérisation pour combustibles, notamment pour l'introduction dans un réformeur chimique pour obtenir de l'hydrogène, comportant un tube de pulvérisation (3) et un injecteur de combustible (1) insérable dans le dispositif de pulvérisation, dans lequel
l'injecteur de combustible (1) destiné à l'apport dosé de combustible au niveau d'au moins un point de dosage (6) est disposé au moyen d'un adaptateur (2) sur un tube de pulvérisation (3) dans lequel un flux de matière thermorégulée peut pénétrer par une conduite d'entrée (5), et l'injecteur de combustible (1) est enfiché dans l'adaptateur (2) et fixé à celui-ci au moyen d'une agrafe de retenue (4).

2. Dispositif de pulvérisation selon la revendication 1,
**caractérisé en ce que**
l'agrafe de retenue (4) peut coulisser dans des évidements (9) pratiqués dans l'adaptateur (2).

3. Dispositif de pulvérisation selon la revendication 1 ou 2,
**caractérisé en ce que**
l'adaptateur (2) présente une ouverture (10).

4. Dispositif de pulvérisation selon la revendication 3,
**caractérisé en ce que**
la conduite d'entrée (5) peut coulisser dans l'ouverture (10).

5. Dispositif de pulvérisation selon la revendication 3,
**caractérisé en ce que**
la conduite d'entrée (5) peut être vissée dans l'ouverture (10) au moyen d'un filetage (14).

6. Dispositif de pulvérisation selon l'une des revendications 3 à 5,
**caractérisé en ce que**
l'ouverture (10) se prolonge parallèlement à un axe radial (17).

7. Dispositif de pulvérisation selon la revendication 6,
**caractérisé en ce que**
l'adaptateur (2) présente un épaulement (12).

8. Dispositif de pulvérisation selon la revendication 7,
**caractérisé en ce que**
l'ouverture (10) se prolonge sous la forme d'une cavité (16) dans l'épaulement (12) de l'adaptateur (2).

9. Dispositif de pulvérisation selon la revendication 8,
**caractérisé en ce que**
la cavité (16) est décalée de manière parallèle vis-à-vis de l'axe radial (17) sur un axe (18).

10. Dispositif de pulvérisation selon la revendication 8 ou 9,
**caractérisé en ce que**
l'ouverture (10) est inclinée sous un angle (α) par rapport à l'axe longitudinal (19) de l'adaptateur (2).

11. Dispositif de pulvérisation selon l'une des revendications 1 à 10,
**caractérisé en ce que**
l'adaptateur (2) est de forme tubulaire.
